Europäisches Patentamt

European Patent Office

Office européen des brevets

(19)

(11) EP 0 410 698 B1

(12) EUROPEAN PATENT SPECIFICATION

(45) Date of publication and mention
of the grant of the patent:
14.02.1996   Bulletin 1996/07

(51) Int Cl.6: H04M 9/10

(21) Application number: 90308098.4

(22) Date of filing: 24.07.1990

(54) **Hands-free telephone**

Handfreier Telefonapparat

Téléphone à mains libres

(84) Designated Contracting States:
DE FR GB IT NL SE

(30) Priority: 24.07.1989 JP 188812/89

(43) Date of publication of application:
30.01.1991   Bulletin 1991/05

(73) Proprietor: NEC CORPORATION
Tokyo (JP)

(72) Inventor: Murata, Yukio, c/o NEC Corporation
Minato-ku, Tokyo (JP)

(74) Representative: Orchard, Oliver John
London WC1V 7PZ (GB)

(56) References cited:
WO-A-87/01255          GB-A- 2 197 166
US-A- 3 942 116        US-A- 4 811 390

## Description

The present invention relates to a hands-free telephone and, more particularly, though not exclusively, to a hands-free telephone advantageously applicable to a automobile telephone or similar mobile telephone system.

It is a common practice with an automobile or car telephone or similar mobile telecommunications equipment to allow conversation to be selectively held on either a mouthpiece and an earpiece built in a handset or an optional hands-free telephone.

A hands-free telephone for on-board use includes an antenna and a radio section which are incorporated in a handset, and a hands-free telephone unit fixed in place within the vehicle cabin. The antenna transmits and receives a radio signal from a base station. The radio section includes a transmitter for transmitting a transmit signal by converting it into a radio signal, a receiver for converting a received radio signal into a received signal, and an antenna duplexer for coupling or uncoupling the transmit and receive radio signals. A variable resistor is provided for adjusting the level of a receive signal to be fed from the receiver to the earpiece. The hands-free telephone unit has a microphone for converting transmit voice into a transmit signal, a first variable attenuator, or variolosser, for attenuating the level of the transmit signal from the microphone in response to a control signal, a second variable attenuator, or variolosser, for attenuating the level of the receive signal from the receiver, a comparator for producing a control signal in response to the transmit and receive signals from the microphone and second variolosser, respectively, and a speaker for converting the receiver signal into voice. While the hands-free telephone is not used, a transmit signal input terminal and a receive signal output terminal of the radio section are connected to, respectively, a transmit and a receive circuit of the handset.

Generally, a hands-free telephone suffers from howling or singing ascribable to the acoustic coupling between a microphone and a speaker. Usually, therefore, a hands-free telephone is constructed such that when transmit voice is inputted, the attenuation by the second variable attenuator is increased while, when receive voice is outputted, the attenuation by the first variable attenuator is increased. The loop gain of the telephone comunications loop including the acoustic coupling circuit between the microphone and the speaker is decreased to eliminate howling or singing.

The hands-free telephone unit usually has a variable resistor for adjusting the volume of voice coming out of the speaker, and such a variable resistor of course needs an extra space for installation. When the hands-free telephone is used as an on-board telephone and the hands-free telephone unit thereof is installed in the vehicle cabin, it is necessary that the above-mentioned variable resistor be located within the user's reach. However, locating the variable resistor having a substantial size in the limited space available in the vehicle cabin is objectionable from the comfortableness and appearance viewpoint.

In the light of the above, the receive signal whose level has been changed by the variable resistor built in the handset may be used as a receive signal to be applied to the hands-free telephone unit. Such a scheme, however, would also change the level of the received signal to be fed to the comparator and would thereby render the volume control at the time of transmission/reception switching unstable.

In the specification of UK patent application number 2,197,166, which was published on May 11 1988, there was proposed a speech-controlled telephone having a path between a microphone and the output of a communication channel via an amplifier and an attenuator. In another path a loudspeaker was coupled to a communication channel via an amplifier and an attenuator. Speech signal levels in each path were detected and the gains in each path were controlled via a differential amplifier. The total gain was kept below a maximum.

In the specification of International patent application number PCT/US86/01383, which was published on February 26 1987 under International publication number WO87/01255, there was proposed a speaker phone for use in high noise environments having variable gain amplifiers for signals from the microphone and to the loudspeaker. The gains of the amplifiers and the sensitivities of noise detectors were varied in opposite directions to give improved communication in high noise environments.

An arrangement to be described below is able to provide a hands-free telephone which allows the volume of received voice to be controlled without resorting to a variable resistor heretofore incorporated in a hands-free telephone unit, and which is of small size

A hands-free telephone to be described below has a radio section, and a hands-free telephone unit. The radio section has a transmitting and receiving section for transmitting a transmit signal by converting it into a radio signal and converting a received radio signal into a receive signal, and a first attenuating section for variably attenuating the receive signal from the transmitting and receiving section. The hands-free telephone unit has a second attenuating section for variably attenuating the transmit signal from a microphone section in response to a control signal, a third attenuating section for variably attenuating the receive signal from the transmitting and receiving section in response to a control signal, a fourth attenuating section for variably attenuating the receive signal from the first attenuating section in response to a control signal, a comparing section for outputting the control signals in response to the transmit signal from the microphone and the receive signal from the third attenuating section, and a voice outputting section for converting the receive signal from the fourth attenuating section into voice.

The second and third variable attenuating sections are used to control howling or singing, while the first and fourth variable attenuating sections are used to adjust the volume of the voice outputting section. Such a configuration eliminates the need for a variable resistor or similar attenuating section heretofore installed in a hands-free telephone unit for variably attenuating a receive signal.

The following description and drawings disclose a previously proposed arrangement, and, by means of examples, the invention which is characterised in the appended claims, whose terms determine the extent of the protection conferred hereby.

In the drawings:-

Fig. 1 is an external view showing a specific construction of a hands-free telephone applicable to a vehicle;
Fig. 2 is a block diagram schematically showing a prior art hands-free telephone;
Fig. 3 is a block diagram schematically showing a hands-free telephone embodying the present invention;
Fig. 4 is a graph representative of a relation between the difference between input signal voltages and the control signal current; and
Fig. 5 is a graph indicative of a relation between the input voltage to a variable attenuator and the attenuation.

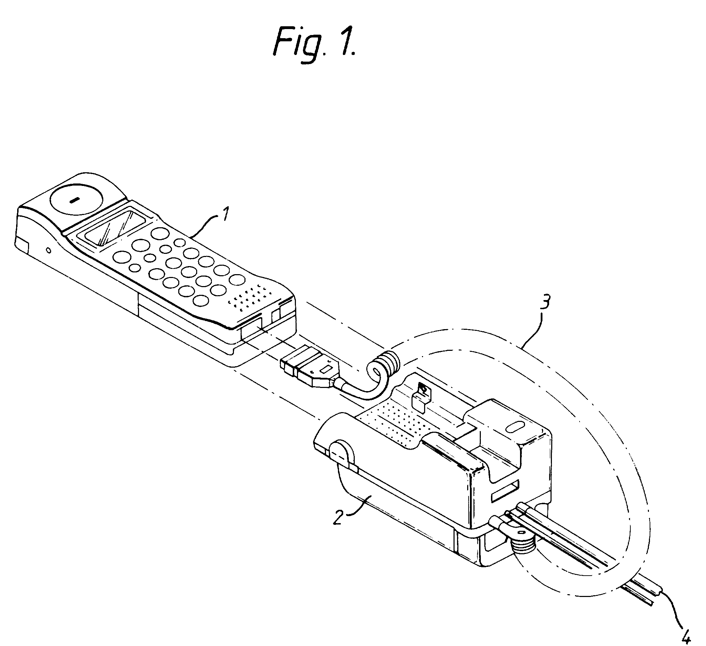

Referring to Fig. 1 of the drawings, a hands-free telephone for on-board use has a handset 1, a hands-free adapter 2, and a curled cord 3 connecting them to each other. The user of the telephone may hold conversation by holding the handset 1 by hand or in a hands-free state, i.e., with the handset 1 being loaded on the hands-free adapter 2. The handset 1 has an antenna, not shown, a radio section, a dialing unit, and a receive circuit and a transmit circuit which will be used when the hands-free conversion is not held. The hands-free adapter 2 includes a part of a hands-free telephone unit. A speaker and a microphone, not shown, included in the hands-free telephone unit are connected to one end of a connection cord 4 and fixed in place in the vehicle cabin. The telephone has substantially the same configuration both in a preferred embodiment of the present invention and in the prior art which will be described. It has been customary to provide a variable resistor on the outer periphery of the adapter 2 to allow the user to adjust by hand the volume of voice coming out of the speaker. In contrast, the illustrative embodiment implements automatic volume adjustment by an additional variable attenuator, or variolosser, which is incorporated in the adapter 2.

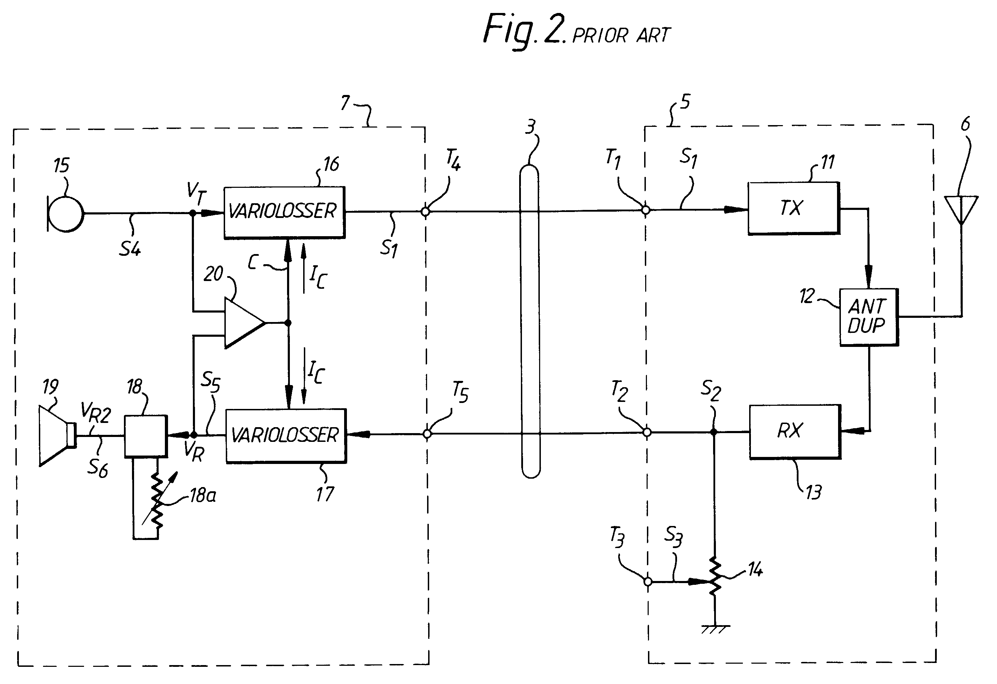

Fig. 2 shows a prior art hands-free telephone in a schematic block diagram. As shown, the prior art telephone has a radio section 5 and an antenna 6 accommodated in the handset 1, and a hands-free telephone unit 7 partly incorporated in the hands-free adapter 2.

In the radio section 5, a transmit signal $S_1$ coming

in through a terminal $T_1$ is converted into a radio signal by a transmitter (TX) 11. The radio signal is routed through an antenna duplexer 12 to the antenna 6. A radio signal coming in through the antenna 6 is fed to a receiver (RX) 13 via the antenna duplexer 12. In response, the receiver 13 converts the input signal into a receive signal $S_2$ and applies it to a terminal $T_2$. The receive signal $S_2$ is adjusted in level by a variable resistor 14 and then fed to a terminal $T_3$ as a receive signal $S_3$. The terminals $T_1$ and $T_3$ are adapted to be connected to, respectively, a mouthpiece microphone and an earpiece receiver built in the handset 1 (Fig. 1). The variable resistor 14 may be composed of a potentiometer.

In the hands-free telephone unit 7, the user's voice (audible signal) inputted to a microphone 15 is converted, or transduced, into a transmit signal $S_4$ whose level is $V_T$. The transmit signal $S_4$ is attenuated by a variable attenuator, or variolosser, 16 and then applied to a terminal $T_4$ as the transmit signal $S_1$. The receive signal $S_2$ outputted via the terminal $T_2$ of the radio section 5 is delivered to a terminal $T_5$ by the connection cord 3. The receive signal $S_2$ is attenuated by a variable attenuator, or variolosser, 17 to become a receiver signal $S_5$ whose level is $V_R$. The receive signal $S_5$ is attenuated by a variable resistor circuit 18. The output of the circuit 18, i.e., a receive signal $S_6$ having a level of $V_{R2}$ is fed to a speaker 19 to be thereby transduced into an audible signal (voice). The attenuation by the individual variolossers 16 and 17 is controlled by a control signal C. Specifically, a comparator 20 generates the control signal C by comparing the level of the transmit signal $S_4$ and that of the receive signal $S_5$. It is to be noted that the microphone 15, speaker 19, variable resistor circuit 18 and variable resistor 18a included in the hands-free telephone unit 7 are loaded in the hands-free adapter 2, Fig. 1.

Assuming that the attenuation by the variable resistor circuit 18 is $L_{VOL1}$ (dB), the voltage level $V_{R2}$ (dBV) of the receive signal $S_6$ in terms of decibel is related to the voltage level $V_R$ (dBV) of the receive signal $S_5$, as follows:

$$V_{R2} = V_R - L_{VOL1} \qquad (1)$$

In the prior art system shown in Fig. 2, the user may adjust the volume of received voice outputted from the speaker 19 by changing the resistance of the variable resistor 18a of variable resistor circuit 18 by hand. The prior art system, therefore, is not practicable unless the hands-free telephone unit 7 is provided with the variable resistor 18a. It is difficult, however, to reduce the dimensions of the variable resistor 18a and, therefore, to allocate an exclusive space for the variable resistor 18a in the telephone unit 7 which is used in a vehicle cabin or similar narrow confinement. Another approach for the adjustment of volume is to apply the receive signal coming out via the terminal T3 of the radio section 5 to the terminal $T_5$ and to change the resistance of the variable resistor 14. Such an approach, however, causes the level $V_R$ of the receive signal fed to the comparator 20 to fluctuate, resulting in unstable volume control in the event of transmission/reception switching.

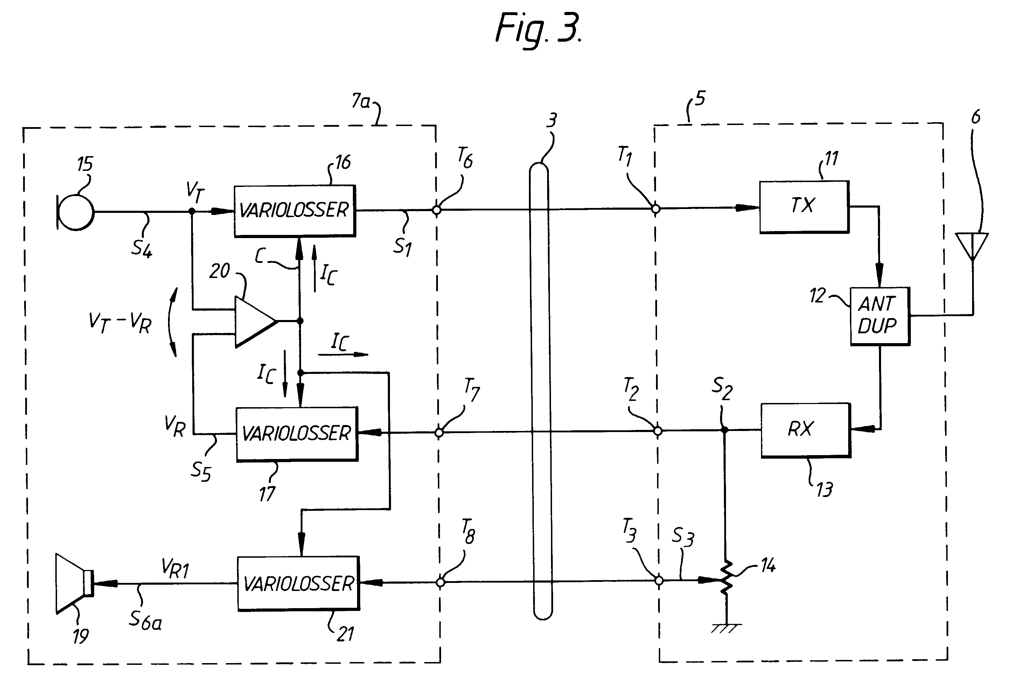

Referring to Fig. 3, an on-board hands-free telephone embodying the present invention is shown and includes a radio section 5 incorporated in the handset 1 and a hands-free telephone unit 7a. The radio section 5 and antenna 6 are identical with those shown in Fig. 2. The microphone 15 and speaker 19 included in the telephone unit 7a are the same as those shown in Fig. 2 and installed in the vehicle cabin outside of the hands-free adapter 2. The telephone unit 7a has variolossers 16 and 17 and a comparator 20 which are also identical with those shown in Fig. 2, except that the output $V_R$ of the variolosser 17 is fed only to the comparator 20. In the illustrative embodiment, the telephone unit 7a is additionally provided with a terminal $T_8$ and a variolosser 21. The terminal $T_8$ is connected to a terminal $T_3$ of the radio section 5 by a connection cord 3. The variolosser 21 is connected at an input terminal thereof to the terminal $T_8$, at an output terminal to the speaker 19, and at a control terminal to the output terminal of the comparator 20.

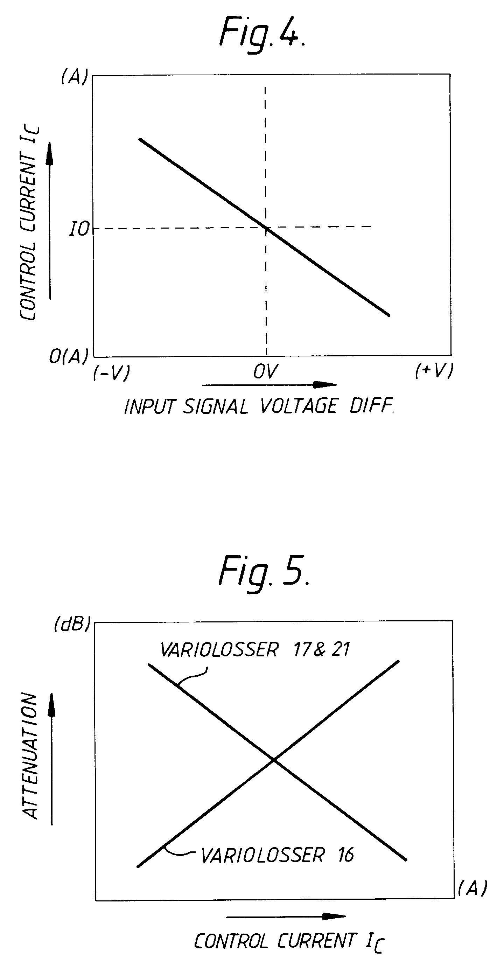

In operation, the microphone 15 transforms transmit voice into a transmit signal $S_4$. The comparator 20 produces a control signal current Ic which is inversely proportional to a difference between the voltage $V_T$ of the transmit signal $S_4$ outputted from the microphone 15 and the voltage $V_R$ of the receive signal $S_5$ fed from the variolosser 17, i.e., an input signal voltage difference ($V_T$ - $V_R$). Fig. 4 indicates a relation between the input signal voltage difference ($V_T$ - $V_R$) and the control signal current Ic. As shown, the control signal current Ic decreases with the increase in the input signal voltage difference. A control signal C having such a control signal current Ic is applied to the variolossers 16, 17 and 21. The variolosser 16 attenuates the transmit signal $S_4$ fed from the microphone 15 and delivers the resulting signal, i.e., the transmit signal $S_1$ to a terminal $T_6$ which is connected to the terminal $T_1$ of the radio section 5 by the connection cord 3. The attenuation $L_T$ by the variolosser 16 is a function of the control signal current Ic of the control signal C and is produced by:

$$L_T = F\ (Ic) \qquad (dB) \qquad (2)$$

Fig. 5 indicates the attenuation characteristic of the variolosser 16. As shown, the attenuation increases with the increase in the control signal current Ic. The variolosser 17 attenuates the receive signal $S_2$ applied thereto via a terminal $T_7$ and delivers the receive signal $S_5$ having the voltage $V_R$ to the comparator 20. The attenuation $L_R$ by the variolosser 17 is a function of the control signal current Ic of the control signal C and is expressed as:

$$L_R = X - F\ (Ic) \qquad (dB) \qquad (3)$$

where X is the maximum attenuation available with the variolosser 17. As Fig. 5 indicates, the attenuation by the variolosser 17 decreases with the increase in the control signal current Ic. The variolosser 21 attenuates the receive signal $S_3$ outputted via the terminal $T_3$ of the radio section 5 and fed thereto via the connection cord 3 and terminal $T_8$. A receive signal $S_{6a}$ voltage $V_{R1}$ outputted by the variolosser 21 is fed to the speaker 19. The attenuation by the variolosser 21 is a function of the control signal current Ic of the control signal C and has the same characteristic as the attenuation $L_R$ by the variolosser 17, i.e., the equation (3). In this manner, when voice is entered on the microphone 15, the attenuations by the variolossers 17 and 21 are increased while, on the reception of a signal, the attenuation of the variolosser 16 is increased, whereby howling or singing is eliminated. The variolossers 16, 17 and 21 each attenuates the voice signal bandwidth substantially flat and may be readily implemented as a transistor and diode circuit which per se is well known in the art. While the attenuation characteristic has been shown and described as varying linearly with the control signal current Ic in terms of decibel, it may of course involve some curvature.

Specific values with which the hands-free telephone system described above may be designed are as follows. The variolossers 16, 17 and 21 each is variable in attenuation over the range of approximately 10 (dB). The voltage difference between the input signals to the comparator 20 is 2 (V) at maximum. The levels of the transmit signal $S_1$ and receive signal $S_2$ as measured at the terminals $T_1$ and $T_2$, respectively, are -20 (dBV) each.

How the system adjusts the volume of voice coming out of the speaker 19 will be described. The output signal of the microphone 15 included in the hands-free telephone unit 7a, i.e., the transmit signal $S_4$ is applied to the comparator 20 and variolosser 16. By attenuating the transmit signal $S_4$, the variolosser 16 delivers the resulting signal $S_1$ to the terminal $T_6$. In this instance, the attenuation by the variolosser 16 is the attenuation $L_T$ represented by the equation (2). The transmit signal $S_1$ is fed from the terminal $T_6$ to the terminal $T_1$ of the radio section 5. The transmitter 11 of the radio section 5 transforms the transmit signal $S_1$ into a high frequency signal, or radio signal. The radio signal is applied to the antenna 6 via the antenna duplexer 12 and therefrom to the base station included in the mobile telecommunications system.

A radio signal from the base station comes in through the antenna 6 and is applied to the receiver 13 via the antenna duplexer 12 of the radio section 5. The receiver 13 converts the radio signal into a receive signal $S_2$ and feeds it to the terminal $T_2$ and variable resistor 14. The variable resistor 14 attenuates the receive signal $S_2$ and applies the resulting receive signal $S_3$ to the terminal $T_3$. The receive signals $S_2$ and $S_3$ are delivered to the hands-free telephone unit 7a by the connection cord 3. In response, the variolosser 21 of the telephone unit 7a further attenuates the attenuated receive signal $S_3$ to produce a receive signal $S_{6a}$ whose voltage is $V_{R1}$. Specifically, the attenuation by the variolosser 21 is the attenuation $L_R$ represented by the equation (3). The speaker 19 converts the receive signal $S_{6a}$ into voice.

The variolosser 17 attenuates the receive signal $S_2$ to produce a receive signal $S_5$ whose voltage is $V_R$ and applies it to the comparator 20, the attenuation being $L_R$ as represented by the equation (3). The comparator 20 generates a control signal C having a control signal current Ic representative of a difference between the voltage $V_R$ of the signal $S_5$ and the voltage $V_T$ of the transmit signal $S_4$. The control signal C changes the attenuations by the three varilossers 16, 17 and 21 accordingly. In the illustrative embodiment, all the variolossers 16, 17 and 18 are controlled by a single control circuit C having a control signal current Ic which is inversely proportional to the difference between input signal voltages. Alternatively, in addition to such a control signal C, a control signal Ca having a control signal current Ica which is proportional to the difference between input signal voltages may be generated, in which case the control signals C and Ca will each control respective one of the varilossers 17 and 21. In this case, the attenuation by the variolossers 17 and 21 will be selected to increase with the increase in the control signal current Ica.

Assume that the input voltages $V_T$ and $V_R$ to the comparator 20 have the same signal voltage levels as in the prior art hands-free telephone shown in Fig. 2, and that the attenuation of the received signal by the variolosser 14 is $L_{VOL}$ (dB). Then, the input voltage $V_{R1}$ to the speaker 19 in terms of decibel is produced by:

$$V_{R1} = V_R - L_R + L_{VOL} + L_R$$

$$= V_R + L_{VOL} \qquad (4)$$

It should be noted in equation (4) that the attenuations $L_R$, $L_{VOL}$ have a negative value. In the prior art hands-free telephone of Fig. 2, the input voltage $V_{R1}$ (dBV) to the speaker 19 in terms of decibel is represented by the equation (1). When the attenuations $L_{VOL1}$ and $L_{VOL}$ by the variable resistors 18a and 14 as represented by the equations (1) and (4), respectively, are equalized, the voltages $V_{R1}$ and $V_{R2}$ input to the speaker 19 will become equal.

In summary, in accordance with the present invention, the variable resistor 14 included in the radio section 5 is operable to adjust the volume of voice to be produced from the speaker 19 of the hands-free telephone unit 7a. Concerning howling and singing, the present invention has the same function as the prior art and achieves comparable performance. This is successful in eliminating the need for an extra space otherwise allocated to a variable resistor for volume adjustment (18a, Fig. 2). Although the present invention needs the additional variolosser 21, the variolosser 21 can be implemented in an extremely small size by IC technologies and can be fully incorporated in the hands-free adapter 2. The elimination of the exclusive variable resistor for volume adjustment leads to the miniaturization of a hands-free telephone system.

## Claims

1. A hands-free telephone including a handset (1) having a radio section (5) for transmitting a signal via a radio frequency signal and for receiving a radio frequency signal to produce a received signal, and a volume control (14) for changing the level of the received signal to produce a level-changed signal, a hands-free adaptor (2) including a microphone (15), a speaker (19), a first attenuator (16) for variably attenuating a voice signal from the microphone (15) and providing the attenuated voice signal to the radio section (5), and a second attenuator (17) for variably attenuating the received signal, characterised in that there is provided a third attenuator (21), that the level-changed signal from the volume control (14) is applied to the third attenuator (21), and that the output from the third attenuator (21) is applied to the speaker (19) to convert the output of the third attenuator (21) into an audible signal.

2. A telephone as claimed in claim 1, wherein the second (17) and the third (21) attenuators provide variable attenuation in response to the same control signal.

3. A telephone as claimed in either claim 1 or claim 2 including a voltage comparator (20), one input to the voltage comparator (20) being applied from the output of the microphone (15), and another input being applied to the voltage comparator (20) from the output from the second attenuator (17) to produce an error signal, the error signal being applied to the first (16), the second (17) and the third (21) attenuators, as a control signal.

4. A telephone as claimed in any one of the preceding claims, wherein the second (17) and the third (21) attenuators have the same attenuation characteristic.

5. A hands-free telephone as claimed in any one of the preceding claims including a hands-free telephone unit (7a), the radio section (5) including a transmitting (11) and a receiving (13) section for respectively transmitting a transmit signal by converting the transmit signal into a radio signal and receiving a received signal by converting a received radio signal into a receive signal, and the volume control (14) for variably attenuating the receive signal from the radio section (5), the hands-free telephone unit (7a) including the first attenuator (16) for variably attenuating the transmit signal from the microphone (15) in response to the control signal, the second attenuator (17) for variably attenuating the receive signal from the radio section (5) in response to a control signal, and a comparator (20) for providing the control signal in response to the signal transmitted from the microphone (15) and a signal received from the second attenuator (17), in which the third attenuator (21) variably attenuates the signal received from the volume control (14) in response to the control signal derived from the output of the comparator (20).

6. A method of controlling the output level of a speaker in a hands-free telephone, including the steps of converting an audible signal into a transmit signal, transmitting the transmit signal via a radio frequency, receiving and demodulating a radio signal to produce a receive signal, manually changing the level of the receive signal to produce a level-changed receive signal and converting a speaker signal into an audible signal, characterised in that the method further includes the steps of producing a control signal in accordance with the transmit and receive signals, and changing the level of the level-changed receive signal in accordance with the control signal to produce a speaker signal.

**Patentansprüche**

1. Freisprech-Fernsprecher mit einem Handapparat (1) mit einem Funkteil (5) zum Senden eines Signals durch ein Funkfrequenzsignal und zum Empfangen eines Funktrequenzsignals, um ein empfangenes Signal zu erzeugen, und einer Lautstärkenregelung (14) zum Ändern des Pegels des empfangenen Signals, um ein pegelverändertes Signal zu erzeugen, mit einem Freisprech-Adapter (2) mit einem Mikrofon (15), einem Lautsprecher (19), einem ersten Dämpfungsglied (16) zum regelbaren Dämpfen eines Sprachsignals vom Mikrofon (15) und zum Liefern des gedämpften Sprachsignals an den Funkteil (5) und einem zweiten Dämpfungsglied (17) zum regelbaren Dämpfen des empfangenen Signals, dadurch gekennzeichnet, daß ein drittes Dämpfungsglied (21) bereitgestellt wird, daß das pegelveränderte Signal von der Lautstärkenregelung (14) dem dritten Dämpfungsglied (21) zugeführt wird und daß das Ausgangssignal vom dritten Dämpfungsglied (21) dem Lautsprecher (19) zugeführt wird, um das Ausgangssignal des dritten Dämpfungsglieds (21) in ein hörbares Signal umzuwandeln.

2. Fernsprecher nach Anspruch 1, wobei das zweite (17) und das dritte (21) Dämpfungsglied eine regelbare Dämpfung als Antwort auf das gleiche Steuersignal durchführen.

3. Fernsprecher nach Anspruch 1 oder 2 mit einem Spannungskomparator (20), wobei ein Eingangssignal des Spannungskomparators (20) vom Ausgang des Mikrofons (15) zugeführt wird und ein weiteres Eingangssignal dem Spannungskomparator (20) vom Ausgang des zweiten Dämpfungsglieds (17) zugeführt wird, um ein Fehlersignal zu erzeugen, wobei das Fehlersignal dem ersten (16), dem zweiten (17) und dem dritten (21) Dämpfungsglied als Steuersignal zugeführt wird.

4. Fernsprecher nach jedem der vorstehenden Ansprüche, wobei das zweite (17) und das dritte (21) Dämpfungsglied dieselbe Dämpfungskennlinie aufweisen.

5. Freisprech-Fernsprecher nach einem der vorhergehenden Ansprüche mit einer Freisprech-Fernsprecheinheit (7a), dem Funkteil (5) mit einem Sende-(11) und einem Empfangs-Teil (13) zum Senden eines Sendesignals durch Umwandeln des Sendesignals in ein Funksignal bzw. zum Empfangen eines empfangenen Signals durch Umwandeln eines empfangenen Funksignals in ein Empfangssignal und der Lautstärkenregelung (14) zum regelbaren Dämpfen des Empfangssignals vom Funkteil (5), wobei die Freisprech-Fernsprecheinheit (7a) aufweist: das erste Dämpfungsglied (16) zum regelbaren Dämpfen des Sendesignals vom Mikrofon (15) als Antwort auf das Steuersignal, das zweite Dämpfungsglied (17) zum regelbaren Dämpfen des Empfangssignals vom Funkteil (5) als Antwort auf das Steuersignal und einen Komparator (20) zum Liefern des Steuersignals als Antwort auf das Signal, das vom Mikrofon (15) übergeben wird, und einem Signal, das vom zweiten Dämpfungsglied (17) empfangen wird, wobei das dritte Dämpfungsglied (21) das von der Lautstärkenregelung (14) empfangene Signal als Antwort auf das Steuersignal, das vom Ausgang des Komparators (20) abgeleitet wird, regelbar dämpft.

6. Verfahren zum Regeln des Ausgangspegels eines Lautsprechers in einem Freisprech-Fernsprecher mit den Schritten: Umwandeln eines hörbaren Signals in ein Sendesignal, Senden des Sendesignals über eine Funktrequenz, Empfangen und Demodulieren eines Funksignals, um ein Empfangssignal zu erzeugen, manuelles Verändern des Pegels des Empfangssignals, um ein pegelverändertes Empfangssignal zu erzeugen, und Umwandeln eines Lautsprechersignals in ein hörbares Signal, gekennzeichnet durch die weiteren Schritte: Erzeugen eines Steuersignals entsprechend dem Sende- und dem Empfangssignal und Verändern des Pegels des pegelveränderten Empfangssignals entsprechend dem Steuersignal, um ein Lautsprechersignal zu erzeugen.

**Revendications**

1. Téléphone à mains libres comprenant un combiné (1) comportant une section radio (5) pour émettre un signal par l'intermédiaire d'un signal de fréquence radio et pour recevoir un signal de fréquence radio en vue de produire un signal reçu , et une commande de volume (14) destinée à modifier le niveau du signal reçu pour produire un signal de niveau modifié , un adaptateur pour mains libres (2) comprenant un microphone (15) , un haut-parleur (19), un premier atténuateur (16) pour atténuer de façon variable un signal vocal venant du microphone (15) et fournissant le signal vocal atténué à la section radio (5), et un second atténuateur (17) destiné à atténuer de façon variable le signal reçu, caractérisé en ce qu'il est prévu un troisième atténuateur (21), en ce que le signal de niveau modifié venant de la commande de volume (14) est appliqué au troisième atténuateur (21), et en ce que la sortie du troisième atténuateur (21) est appliquée au haut-parleur (19) pour convertir la sortie du troisième atténuateur (21) en un signal audible.

2. Téléphone selon la revendication 1, dans lequel les second (17) et troisième (21) atténuateurs fournissent un affaiblissement variable en réponse au même signal de commande .

3. Téléphone selon l'une ou l'autre des revendications 1 ou 2 , comprenant un comparateur de tension (20) , une entrée du comparateur de tension (20) étant appliquée à partir de la sortie du microphone (15), et l'autre entrée étant appliquée au comparateur de tension (20) à partir de la sortie du second atténuateur (17) pour produire un signal d'erreur , le signal d'erreur étant appliqué aux premier, (16), second (17) et troisième (21) atténuateurs, comme signal de commande.

4. Téléphone selon l'une quelconque des revendications précédentes , dans lequel les second (17) et troisième (21) atténuateurs possèdent la même caractéristique d'affaiblissement.

5. Téléphone à mains libres selon l'une quelconque des revendications précédentes comprenant une unité de téléphone à mains libres (7a), la section radio (5) incluant une section d'émission (11) et une section de réception (13) pour , respectivement, transmettre un signal émis en convertissant le signal émis en signal radio et recevoir un signal reçu en convertissant un signal radio reçu en un signal de réception , et la commande de volume (14) pour atténuer de façon variable le signal de réception venant de la section radio (5), l'unité de téléphone à mains libres (7a) comprenant le premier atténuateur (16) pour atténuer de façon variable le signal émis venant du microphone (15) en réponse au signal de commande, le second atténuateur (17) pour atténuer de façon variable le signal de réception venant de la section radio (5) en réponse à un signal de commande et un comparateur (20) pour fournir le signal de commande en réponse au signal émis à partir du microphone (15) et un signal reçu à partir du second atténuateur (17), dans lequel le troisième atténuateur (21) atténue de façon variable le signal reçu à partir de la commande de volume (14) en réponse au signal de commande dérivé de la sortie du comparateur (20).

6. Procédé de commande du niveau de sortie d'un haut-parleur dans un téléphone à mains libres , comprenant les étapes consistant à convertir un signal sonore en un signal émis , à transmettre le signal émis par l'intermédiaire d'une fréquence radio, à recevoir et à démoduler un signal radio pour produire un signal de réception, à modifier manuellement le niveau du signal reçu pour produire un signal reçu de niveau modifié et à convertir un signal de haut-parleur en un signal sonore, caractérisé en ce que le procédé comprend de plus les étapes consistant à produire un signal de commande en conformité avec les signaux émis et reçus et à modifier le niveau du signal reçu de niveau modifié selon le signal de commande pour produire un signal de haut-parleur.

*Fig. 1.*

Fig.2. PRIOR ART

EP 0 410 698 B1

Fig. 3.

EP 0 410 698 B1

## Fig.4.

## Fig.5.